Europäisches Patentamt

European Patent Office

Office européen des brevets

(19)

(11) Numéro de publication: **0 188 987**
**B1**

(12) **FASCICULE DE BREVET EUROPEEN**

(45) Date de publication du fascicule du brevet:
17.05.89

(51) Int. Cl.⁴: **B65G 61/00**

(21) Numéro de dépôt: **85450030.3**

(22) Date de dépôt: **20.12.85**

(54) Installation de palettisation notamment de paquets de sacs.

(30) Priorité: **21.12.84 FR 8419853**

(43) Date de publication de la demande:
**30.07.86 Bulletin 86/31**

(45) Mention de la délivrance du brevet:
**17.05.89 Bulletin 89/20**

(84) Etats contractants désignés:
**AT BE CH DE GB IT LI LU NL SE**

(56) Documents cités:
**EP-A- 0 131 555**
**FR-A- 2 331 498**
**FR-A- 2 506 275**
**JP-A-59 128 126**
**NL-A- 7 006 853**

(73) Titulaire: **Société d'Etude d'Equipement et de Modernisation Industrielle S.E.E.M.I., 6 route de Claix, F-16400 La Couronne(FR)**

(72) Inventeur: **Corteccia, Robert, 33 rue de la Libération, F-16400 La Couronne(FR)**

(74) Mandataire: **Thébault, Jean-Louis, Cabinet Thébault S.A. 50 Cours de Verdun, F-33000 Bordeaux(FR)**

ACTORUM AG

## Description

La présente invention a trait à un dispositif tel que décrit dans le préambule de la revendication 1.

Une installation de ce genre est connu par FR-A 2 506 275.

Ce document dècrit un appareil de chargement de palette comportant un dispositif de prèhension, mobile dans les trois directions et muni d'organes escamotables de saisie par en dessous des paquets à manipuler. Toutefois, un tel agencement ne donne pas pleinement satisfaction car le dispositif de préhension ne peut s'approcher au plus près de la surface sur laquelle il doit déposer sa charge puisqu'il faut l'espace de dégagement latéral nécessaire pour que les organes de saisie s'écartent et lâchent le paquet.

Le but de l'invention est de pallier ces inconvénients en proposant une installation permettant un positionnement et un taquage précis, sûr, en douceur et suivant n'importe quelle orientation, d'une très grande diversité de paquets.

A cet effet l'invention a pour objet une installation de palettisation notamment de paquets de sacs ou analogue, comprenant une table de support des palettes à charger, une station d'amenée des paquets à palettiser, un moyen de préhension et transport comportant un bâti mobile dans les trois directions, apte à saisir par en dessous et soulever un à un les paquets sur ladite station en vue de les disposer en couches successives sur une palette en place sur ladite table, à l'aide d'organes de saisie articulés escamotables, des moyens d'évacuation des palettes chargées et des moyens pour commander par programmation l'orientation mutuelle desdits paquets dans la pile, ladite installation étant caractérisée en ce que lesdits organes de saisie sont constitués d'une partie solidaire dudit bâti et demeurant constamment verticale et d'une partie formant doigt articulée à l'extrémité inférieure de ladite partie et susceptible d'occuper deux positions, l'une, pour laquelle les doigts sont sensiblement à l'horizontale de manière à soutenir un paquet par en dessous en au moins deux endroits distincts à la périphérie dudit paquet, et, l'autre, pour laquelle les doigts s'alignent parallèlement auxdites parties, en ce que la table de support des palettes à charger est une table élévatrice, en ce que l'installation comporte une station de stockage de palettes vides, un dispositif d'introduction une à une des palettes vides sur ladite table dans sa position haute et des moyens pour abaisser par paliers ladite table au fur et à mesure de l'élévation de la pile de paquets et en ce que ladite station d'amenée des paquets comporte une deuxième table élévatrice de présentation des paquets un à un par élévation de chaque paquet à hauteur desdits organes de saisie en vue de leur prise en charge par ces derniers.

L'encombrement d'une telle installation est véritablement minimal, sans aucune zone de danger débordant du volume délimité par le portique supportant l'organe de préhension. De plus, les mouvements de ce dernier sont réduits au strict nécessaire et notablement moins importants que ceux des dispositifs à fourche traditionnels ce qui fait gagner un temps précieux au cours de l'empilage.

D'autres caractéristiques et avantages ressortiront de la description qui va suivre d'un mode de réalisation de l'installation selon l'invention, description donnée à titre d'exemple uniquement et en regard des dessins sur lesquels :

- Figure 1 représente une vue en élévation latérale d'une installation conforme à l'invention ;
- Figure 2 représente une vue en coupe suivant la ligne II-II de l'installation de la figure 1 ;
- Figure 3 représente suivant une vue en élévation latérale une variante de réalisation de l'organe de préhension et de la station d'amenée des paquets de l'installation de la figure 1, et
- Figure 4 représente une vue de gauche du dispositif de la figure 3.

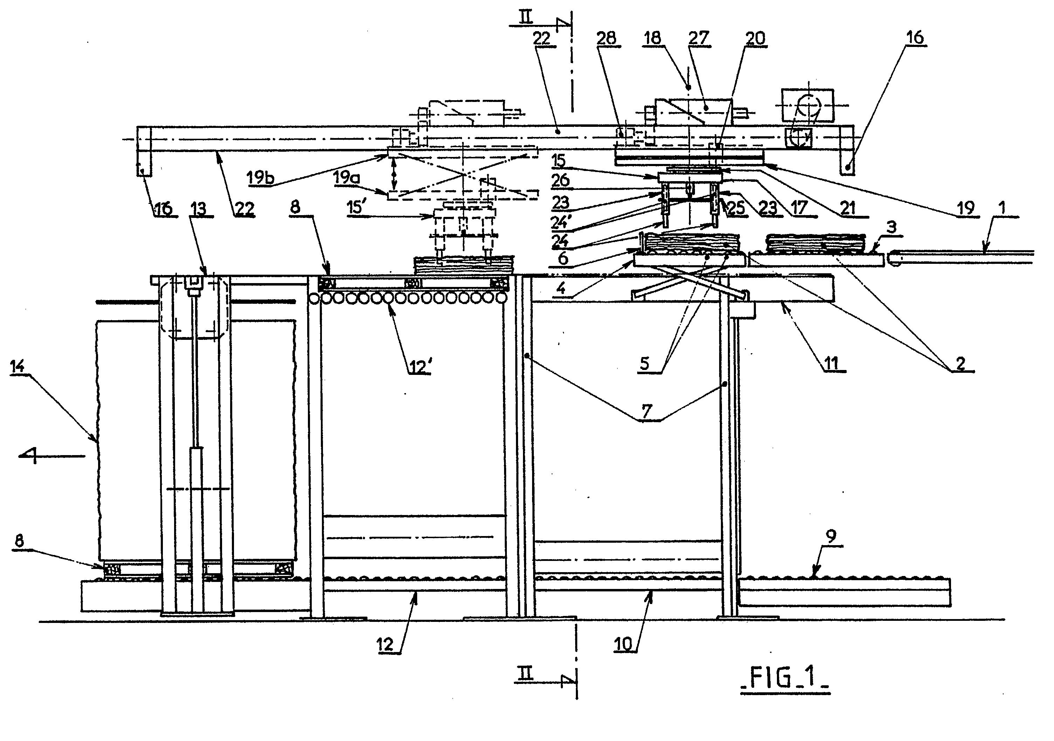

Sur la figure 1 on a représenté en 1 un convoyeur à bande chargé d'amener les paquets de sacs 2 les uns après les autres sur un convoyeur d'attente 3 à rouleaux moteurs. Dans le prolongement du convoyeur 3 est disposée une table élévatrice 4 à rouleaux moteurs 5 munie d'un taqueur 6 réglable en position longitudinalement à la table 4.

La table 4 est disposée à la partie supérieure d'un bâti 7 d'une station de stockage de palettes 8 vides amenées par un convoyeur 9 à rouleaux moteurs disposé en-dessous des convoyeurs 1 et 3. Cette station est de structure bien connue et comporte une table élévatrice 10 à rouleaux moteurs présentant les palettes vides une à une à un dispositif 11 de transfert horizontal de chaque palette 8 sur une table élévatrice 12 à rouleaux moteurs, disposée à côté de la table 10.

La palette vide 8 est transférée au-dessus de la table 12 par des bras porteurs du dispositif 11 et déposée sur la table 12 dès que celle-ci est revenue en position haute (symbolisée en 12' sur la figure 1) après avoir évacué la palette précédente une fois pleine. Les tables 10 et 12 et le dispositif 11 étant parfaitement connus, n'ont pas besoin d'être décrits plus en détail.

Latéralement à la table 12 et à l'opposé de la table 10 est disposée une station 13 d'évacuation de la palette 8 avec sa pile 14 de paquets 2.

Au-dessus des tables 10 et 12 évolue un organe de préhension 15 supporté par un portique 16.

L'organe de préhension 15 comprend un bâti rectangulaire 17 monté rotatif autour d'un axe vertical 18 solidaire d'un chariot 19 portant un moteur 20 d'entraînement en rotation dudit bâti 17 par l'intermédiaire d'une couronne dentée 21. Le chariot 19 peut se déplacer dans un plan horizontal suivant deux directions orthogonales, à savoir l'axe longitudinal des convoyeurs 1,3 et l'axe des rouleaux 5, à l'aide d'une structure bien connue comportant une poutre creuse porteuse 22 mobile sur les deux poutres horizontales fixes (parallèles aux rouleaux 5) du portique 16 et le long de laquelle peut se déplacer le chariot 19. En outre, ce dernier est constitué de deux cadres 19a, 19b rapprochables l'un de l'autre afin de monter ou descendre l'organe de préhension comme illustré en 15' sur la figure 1.

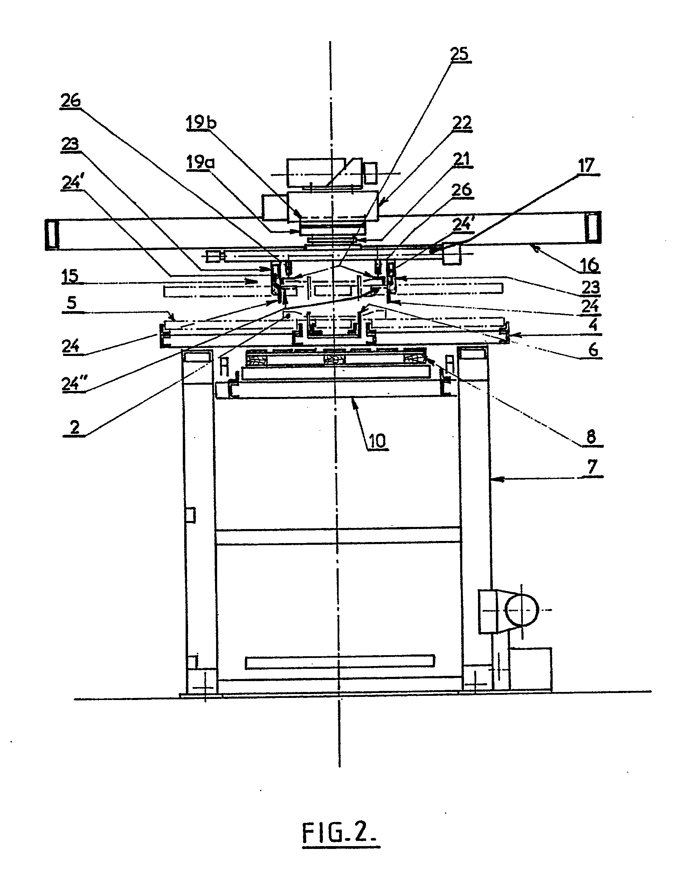

Dans le mode de réalisation des figures 1 et 2, l'organe de préhension 15 comporte un bâti 17 rectangulaire dont la longueur est parallèle aux rouleaux 5 (lors de la saisie d'un paquet 2 sur la table 4) et à l'axe longitudinal des sacs des paquets 2.

Sur les deux petits côtés du bâti 17 sont disposés deux montants verticaux 23 au voisinage de l'extrémité inférieure desquels sont montés des doigts 24 articulés autour d'axes horizontaux parallèles auxdits petits côtés du bâti 17. Les doigts 24 sont des lames minces, plates, actionnées par des vérins 24' portés par les montants 23 de manière à occuper deux positions extrêmes, l'une, verticale, pour laquelle la face tournée vers le paquet 2 en charge par l'organe 15 est dans le prolongement de la face interne des montants 23 (figure 2) et, l'autre, horizontale (position 24": figure 2), pour laquelle les doigts soutiennent le paquet 2 à ses deux extrémités.

Dans les dessins les sacs sont des sacs en papier pliés à plat et présentant à leurs extrémités des surépaisseurs dues aux pliages et qui se trouvent en regard des doigts 24 lors de leur saisie par l'organe 15.

Pour améliorer la saisie du paquet 2 qui est relativement souple et déformable, l'organe 15 peut comporter comme représenté sur les dessins des plaques mobiles horizontales 25 mues par des vérins 26 portés par les montants 23, en regard de chaque paire de doigts 24 afin de saisir en sandwich les deux extrémités du paquet 2.

En outre, les montants 23 sont montés réglables en position le long des côtés longitudinaux du bâti 17 afin de régler l'écartement entre doigts 24 (figure 2) en fonction de la longueur du paquet 2.

Le fonctionnement de l'installation représentée et décrite ci-dessus est le suivant.

Les paquets 2 arrivent les uns derrière les autres sur le convoyeur 1, puis sur le convoyeur d'attente 3 et, enfin, sur la table élévatrice 4. Celle-ci reçoit un paquet 2 en position basse.

L'organe de préhension 15 est amené à l'aplomb de la table 4.

Les rouleaux moteurs 5 de la table 4 sont à certains endroits espacés de façon à permettre le passage des doigts 24 au cours de la montée de la table 4 afin d'élever le paquet 2 à hauteur des doigts 24 comme représenté sur la figure 1. Au cours de cette opération les doigts 24 sont éloignés des bords extrêmes du paquet. Puis les montants 23 sont rapprochés pour taquet le paquet 2 et les doigts 24 relevés à l'équerre sous la face inférieure du paquet.

En même temps les plaques 25 sont abaissées pour prendre en sandwich les extrémités du paquet, et la table 4 est rabaissée pour recevoir le paquet suivant.

L'organe 15 est alors amené au dessus de la palette 8 disposée sur la table 12 et placé suivant une orientation et un emplacement prédéterminés, à la manière connue, l'ensemble des commandes des organes mobiles de l'installation étant réalisé à partir d'un poste (non représenté) comportant une unité de programmation de l'empilage des paquets.

À cet effet, le chariot 19 assure par un ensemble moteur électrique 27 - réducteur 28 les déplacements dans un plan horizontal, la structure extensible 19a,19b, mue à partir d'un moto-réducteur électrique (non représenté) porté par le chariot 19, assure le déplacement vertical et la couronne rotative 21 assure l'orientation angulaire dans le plan horizontal du paquet 2 avant son dépôt sur la palette 8 ou la pile formée sur cette dernière.

Pour effectuer le dépôt du paquet 2 l'organe 15 est amené à une distance de la face supérieure de la palette ou de la pile permettant avec une certaine marge de sécurité (position 15', figure 1) l'escamotage vers le bas des doigts 24 de façon que par gravité le paquet 2 tombe à l'endroit desiré avec le minimum de déplacement vertical. Dans ces conditions le lâchage du paquet ne perturbe ni la pile du paquet ni la pile des paquets sur la palette.

L'organe 15 revient alors au-dessus de la table 4 pour prendre en charge le paquet suivant. On conçoit facilement que les déplacements de l'organe 15 (et donc les temps de fonctionnements) sont réduits au strict minimum, ce qui permet d'accroître substantiellement la cadence d'empilage.

Lorsqu'une couche est complète sur la palette 8, la table 12 est abaissée automatiquement d'un cran, la détection se faisant par exemple par cellules photoélectriques à la manière habituelle.

Lorsque la hauteur de la pile 14 atteint une valeur prédéterminée, l'ensemble palette 8 — pile 14 est amené au poste 13 avant l'évacuation sur un convoyeur (non représenté).

L'ensemble de l'installation y compris l'alimentation en paquets 2, palettes vides 8 et l'évacuation des palettes pleines est totalement automatique.

Plusieurs dimensions de paquets peuvent être prises en compte grâce à la course de la table 4, la position du taqueur 2, l'écartement des ensembles en regard 23 à 26 et la course de l'élément extensible 19a.

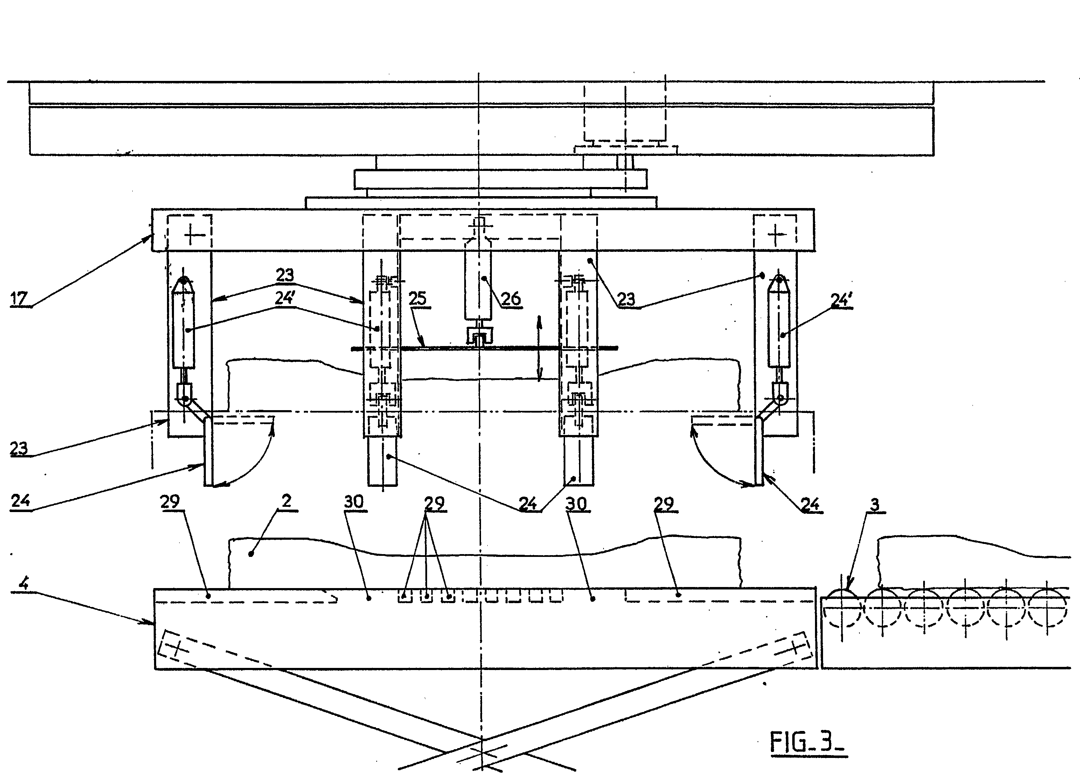

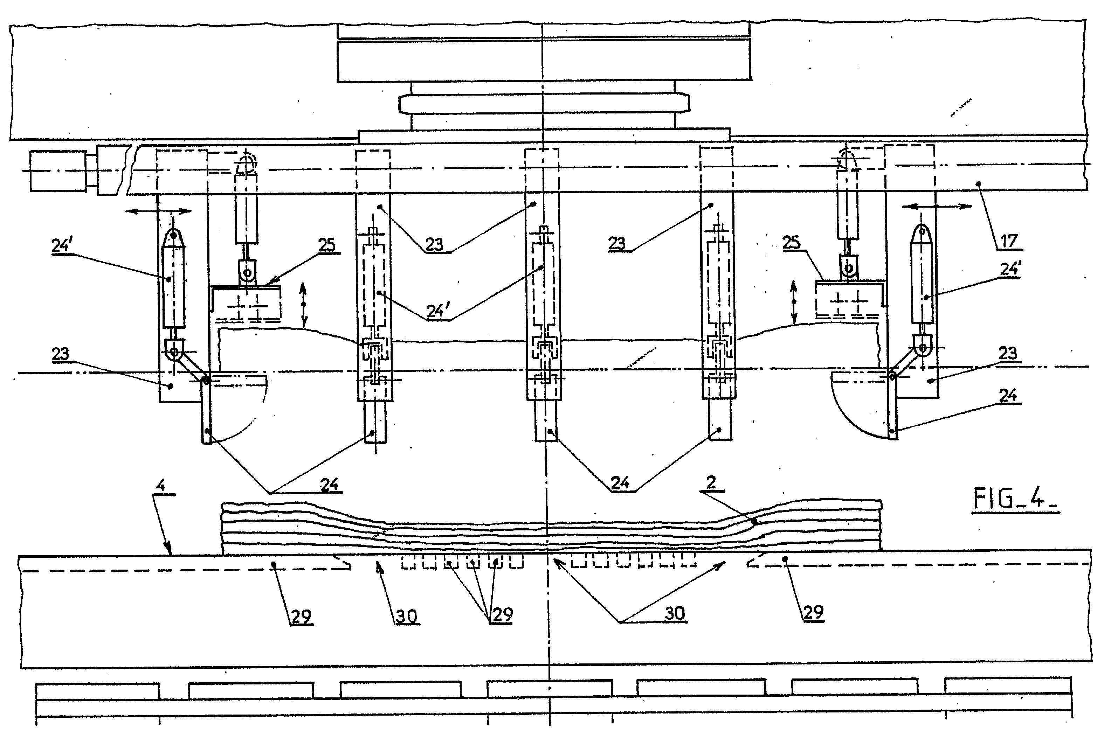

Les figures 3 et 4 illustrent une variante de réalisation selon laquelle les grands côtés (figure 4) du bâti 17 comportent comme les petits côtés (figure 3) des montants 23 (au nombre de trois de chaque côté) avec des doigts 24 répartis le long des côtés longitudinaux des paquets 2 afin de mieux saisir ces derniers et également réglables en position le long du bâti 17.

La table élévatrice 4 est conformée en conséquence et présente sur sa face supérieure des lames-supports horizontales fixes 29 disposées à angle droit et en séries espacées suivant des intervalles 30 de dimension appropriée au libre passage des doigts 24.

Le paquet 2 est amené du convoyeur d'attente 3 sur la table 4 par un pousseur non représenté de structure classique. Le fonctionnement de l'installation est par ailleurs tout à fait identique à celui de l'installation des figures 1 et 2.

Enfin, l'invention n'est évidemment pas limitée aux modes de réalisation représentés et décrits ci-dessus mais en couvre au contraire toutes les variantes notamment en ce qui concerne le nombre, la forme et la disposition des doigts escamotables 24 et les structure et agencement des moyens de commande de ces doigts et des plaques presseuses 25.

Bien entendu, l'invention ne s'applique pas qu'au conditionnement des sacs en papier mais à celui de tous paquets, d'objets plats empilés tels que feuilles, cartons et, d'une manière générale, de tous objets quelles que soient leurs formes, dimensions, rigidité, dans la mesure où ils sont susceptibles d'être manipulés par l'organe de préhension selon l'invention.

## Revendications

1. Installation de palettisation notamment de paquets de sacs (2) ou analogue, comprenant une table (12) de support des palettes à charger (8), une station (1, 3) d'amenée des paquets à palettiser, un moyen de préhension et transport comportant un bâti (17) mobile dans les trois directions, apte à saisir par en dessous et soulever un à un les paquets sur ladite station (1, 3) en vue de les disposer en couches successives sur une palette (8) en place sur ladite table (12), à l'aide d'organes de saisie articulés escamotables, des moyens d'évacuation des palettes chargées et des moyens pour commander par programmation l'orientation mutuelle desdits paquets dans la pile, ladite installation étant caractérisée en ce que lesdits organes de saisie sont constitués d'une partie (23) solidaire dudit bâti (17) et demeurant constamment verticale et d'une partie formant doigt (24) articulée l'extrémité inférieure de ladite partie (23) et susceptible d'occuper deux positions, l'une, pour laquelle les doigts (24) sont sensiblement à l'horizontale de manière à soutenir un paquet (2) par en dessous en au moins deux endroits distincts à la périphérie dudit paquet, et, l'autre, pour laquelle les doigts s'alignent parallèlement auxdites parties (23), en ce que la table (12) de support des palettes à charger est une table élévatrice, en ce que l'installation comporte une station de stockage de palettes vides (8), un dispositif (11) d'introduction une à une des palettes vides sur ladite table dans sa position haute et des moyens pour abaisser par paliers ladite table (12) au fur et à mesure de l'élévation de la pile de paquets et en ce que ladite station d'amenée des paquets comporte une deuxième table élévatrice (4) de présentation des paquets (2) un à un par élévation de chaque paquet à hauteur desdits organes de saisie (23, 24) en vue de leur prise en charge par ces derniers.

2. Installation suivant la revendication 1, caractérisée en ce que ledit bâti (17) du moyen de préhension et transport comporte des moyens (25, 26) pour prendre en sandwich ledit paquet (2) entre eux et au moins certains des doigts (24).

3. Installation suivant la revendication 1 ou 2, caractérisée en ce que ledit bâti (17) du moyen de préhension et transport est un cadre rectangulaire présentant sur ses côtés latéraux et/ou ses côtés longitudinaux, au moins un organe de saisie (23, 24), ceux-ci étant disposés en vis à vis, les doigts (24) des côtés latéraux et/ou des côtés longitudinaux étant réglables en position horizontalement.

4. Installation suivant l'une des revendications 1 à 3, caractérisée en ce que ledit bâti (17) du moyen de préhension et transport est porté par un bâti extensible verticalement (19a, 19b) constituant un chariot (19) supporté par un portique (16) et mobile dans deux directions horizontales perpendiculaires.

5. Installation suivant la revendication 4, caractérisée en ce que ledit bâti (17) est relié audit bâti extensible (19a, 19b) par une liaison pivotante autour d'un axe vertical (18) permettant une rotation de 360° dudit moyen de préhension et transport autour dudit axe.

6. Installation suivant l'une des revendications 1 à 5, caractérisée en ce que chaque doigt (24) est actionné par un moyen de commande (24') monté sur la partie (23) associée audit doigt.

7. Installation suivant l'une des revendications 1 à 6, caractérisée en ce que ladite table élévatrice (4) est munie de rouleaux moteurs (5) dont l'espacement à certains endroits est déterminé de façon à permettre le libre passage vertical d'au moins certains des doigts (24) des organes de saisie.

8. Installation suivant l'une des revendications 1 à 6, caractérisée en ce que ladite table élévatrice (4) est munie de lames supports horizontales fixes (29) disposées en séries orientées à 90° et définissant entre elles des intervalles (30) de dimension suffisante pour permettre le libre passage vertical des doigts (24) des organes de saisie.

## Patentansprüche

1. Palettiervorrichtung, insbesondere für Pakete von Beuteln (2) o. dgl., umfassend einen Auflagetisch (12) für zu beladende Paletten (8), eine Station (1, 3) zum Zuführen der zu palettierenden Pakete, ein Mittel zum Greifen und Transportieren umfassend einen in den drei Richtungen beweglichen Rahmen (17), der geeignet ist, die Pakete von der besagten Station (1, 3) eines nach dem anderen von unten mit Hilfe von verschwenkbaren und einziehbaren Greiforganen zu ergreifen und anzuheben, um sie in aufeinanderfolgenden Schichten auf einer Palette (8) auf dem besagten Tisch (12) abzulegen, Mittel zum Entfernen von beladenen Paletten und Mittel zum Steuern der gegenseitigen Orientierung der besagten Pakete in dem Stapel durch Programmierung, wobei die besagte Vorrichtung dadurch gekennzeichnet ist, daß die besagten Greiforgane aus einem fest mit dem besagten Rahmen (17) verbundenen und ständig vertikal verbleibenden Abschnitt (23) und einem Finger (24) umfassenden Abschnitt (24) gebildet werden, der am unteren Ende des besagten Abschnitts (23) angelenkt und in der Lage ist, zwei Positionen einzunehmen, die eine, in der die Finger (24) im wesentlichen in der Horizontalen derart sind, dass ein Paket (2) von unten an wenigstens bestimmten Stellen am Umfang des besagten Pakets gehalten wird, und die andere, in der die Finger parallel mit den besagten Abschnitten (23) ausgerichtet sind, daß der Trägertisch (12) für die zu beladenen Paletten ein Hubtisch ist, daß die Vorrichtung eine Station zum Lagern von leeren Paletten (8), eine Einrichtung (11) zum Zuführen von leeren Paletten eine nach der anderen zum besagten Tisch in dessen oberer Position und Mittel zum schrittweisen Absenken des besagten Tisches (12) entsprechend der Erhöhung des Stapels von Paketen umfaßt und daß die besagte Station zum Ergreifen von Paketen einen zweiten Hubtisch (4) zum Präsentieren von Paketen (2) eines nach dem anderen durch Anheben jedes Pakets auf die Höhe der besagten Greiforgane (23, 24) zur Übernahme durch die letzteren umfaßt.

2. Vorrichtung gemäß Anspruch 1, dadurch gekennzeichnet, daß der besagte Rahmen (17) des Mittels zum Greifen und Transportieren Mittel (25, 26) zum sandwichartigen Erfassen des besagten Pakets (2) zwischen sich und wenigstens bestimmten der Finger (24) umfaßt.

3. Vorrichtung gemäß Anspruch 1 oder 2, dadurch gekennzeichnet, daß der besagte Rahmen (17) der Mittel zum Greifen und Transportieren ein rechteckiger Rahmen ist, der an seinen seitlichen und/oder Längsseiten wenigstens ein Greiforgan (23, 24) aufweist, die gegenüberliegend angeordnet sind, wobei die Finger (24) an den seitlichen und/oder Längsseiten bezüglich ihrer Horizontalstellung einstellbar sind.

4. Vorrichtung gemäß einem der Ansprüche 1 bis 3, dadurch gekennzeichnet, daß der besagte Rahmen (17) der Mittel zum Greifen und Transportieren von einem vertikal ausfahrbaren Rahmen (19a, 19b) getragen wird, der einen Schlitten (19) bildet, der von einer Brücke (16) getragen wird und in zwei zueinander senkrechten Horizontalrichtungen beweglich ist.

5. Vorrichtung gemäß Anspruch 4, dadurch gekennzeichnet, daß der besagte Rahmen (17) mit dem besagten ausfahrbaren Rahmen (19a, 19b) über eine Schwenkverbindung um eine vertikale Achse (18) verbunden ist, die eine Drehung um 360° der besagten Mittel zum Greifen und Transportieren um die besagte Achse ermöglicht.

6. Vorrichtung gemäß einem der Ansprüche 1 bis 5, dadurch gekennzeichnet, daß jeder Finger (24) durch ein Steuermittel (24') betätigt wird, das an dem zu dem besagten Finger gehörigen Abschnitt (23) montiert ist.

7. Vorrichtung gemäß einem der Ansprüche 1 bis 6, dadurch gekennzeichnet, daß der besagte Hubtisch (4) mit antreibbaren Rollen (5) versehen ist, deren Abstand an bestimmten Stellen derart bestimmt ist, daß der freie vertikale Durchgang wenigstens bestimmter Finger (24) der Greiforgane ermöglicht wird.

8. Vorrichtung gemäß einem der Ansprüche 1 bis 6, dadurch gekennzeichnet, daß der besagte Hubtisch (4) mit festen horizontalen stabförmigen Trägern (29) versehen ist, die in Serien, die um 90° gegeneinander orientiert sind, angeordnet sind und zwischen sich Zwischenräume (30) einer Abmessung, die ausreicht, um den freien vertikalen Durchgang von Fingern (24) der Greiforgane zu ermöglichen, definieren.

**Claims**

1. Palletizing device, specifically for bundles of bags (2) or similar, comprising a platform (12) supporting the pallets to be loaded (8), a feed station (1, 3) for supplying the bundles to be loaded on the pallets, instruments for gripping and moving the bundles, comprising stand (17) which can move in three directions, designbed to grip and lift the bundles one by one from the said station (1, 3) in order to place them in successive layers on to a pallet (8), positioned on the said platform (12), using a retractable, hinged gripping instrument, a means of removing the loaded pallets and a means of controlling the movement of the bundles in the pile by programming, the said device being characterized in that the said gripping device comprises a part (23) which is integral with the said stand (17) and which is maintained in a vertical position, and a part forming a finger (24) which is hinged on to the lower end of the said part (23) and which may be set in two positions; one in which the fingers (24) are roughly horizontal in order to support a bundle (2) from below at least two places around the edge, and the other, in which the fingers are aligned parallel to the said parts (23); in that the platform (12) supporting the pallets to be loaded is an elevating platform; in that the device comprises a storage station for the empty pallets (8) one by one on to the said platform in its upper position, and a means of gradually lowering the said platform (12) as the stack of bundles increases; and in that the said feed station for the bundles comprises a second elevating platform (4) which supplies the bundles (2) individually by raising each bundle to the level of the gripping mechanism (23, 24) which then removes it.

2. Device as claimed in claim 1, characterized in that the said stand (17) of the gripping and moving device comprises a means (25, 26) of gripping the bundles (2) between itself and at least some of the fingers (24).

3. Device as claimed in claim 1 or 2, characterized in that the said stand (17) of the gripping and moving device is a rectangular frame which has on its lateral and/or longitudinal sides at least one gripping instrument (23, 24), these being arranged opposite each other, the position of the fingers (23) on the lateral and/or longitudinal sides being horizontally adjustable.

4. Device as claimed in one of claims 1 to 3, characterized in that the said stand (17) of the gripping and moving device is mounted on a vertically extensible frame (19a, 19b), comprising a slide (19) borne by a support (16) which can move perpendicularly in two horizontal directions.

5. Device as claimed in claim 4, characterized in that the said stand (17) is linked to the said extensible frame (19a, 19b) by a connection which pivots around a vertical axis (18), allowing the said gripping and moving device to rotate 360° around the said axis.

6. Device as claimed in one of claims 1 to 5, characterized in that each finger (24) is activated by a control unit (24') mounted on the part (23) joined to the finger.

7. Device as claimed in one of claims 1 to 6, characterized in that the said elevating platform (4) is equipped with driving rollers (5), the spacing of which at specific places is arranged in order to allow at least some of the fingers (24) of the gripping mechanism to pass through vertically.

8. Device as claimed in one of claims 1 to 6, characterized in that the said elevating platform (4) is equipped with fixed horizontal support shafts (29) arranged in series angled at 90° and having between them gaps (30) large enough to allow the fingers (24) of the gripping to pass through vertically.

FIG.1

EP 0 188 987 B1

FIG.2.

FIG. 3

EP 0 188 987 B1

FIG. 4.